(19) Europäisches Patentamt
European Patent Office
Office européen des brevets

(11) EP 0 625 396 B1

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int. Cl.$^6$: **B23B 51/02**, E21B 10/44

(21) Anmeldenummer: **94104474.5**

(22) Anmeldetag: **22.03.1994**

(54) **Bohrwerkzeug**

Drilling tool

Foret

(84) Benannte Vertragsstaaten:
**CH DE FR GB IT LI**

(30) Priorität: **05.05.1993 DE 4314868**

(43) Veröffentlichungstag der Anmeldung:
**23.11.1994 Patentblatt 1994/47**

(73) Patentinhaber:
**Hawera Probst GmbH + Co.**
**88212 Ravensburg (DE)**

(72) Erfinder: **Peetz, Wolfgang**
**D-88273 Fronreute (DE)**

(74) Vertreter:
**Patentanwälte**
**Eisele, Otten & Roth**
**Seestrasse 42**
**88214 Ravensburg (DE)**

(56) Entgegenhaltungen:
**EP-A- 0 470 354**      **US-A- 2 733 943**
**US-A- 4 202 420**      **US-A- 4 262 762**

## Beschreibung

Die Erfindung betrifft ein Bohrwerkzeug nach dem Oberbegriff des Anspruchs 1.

Bohrwerkzeuge, die aus mehreren Einzelteilen zusammengesetzt sind, sind bekannt. Dabei betrifft die Mehrteiligkeit nicht nur den Einsatz von Hartmetallschneiden in den Bohrerkopf, sondern die mehrteilige Ausbildung von Bohrerkopf und/oder Wendelschaft und/oder Einspannschaft.

Aus der DE-OS 22 46 965 ist beispielsweise ein Spiralbohrer bekannt geworden, bei welchem der Bohrerkopf und der Wendelschaft zweiteilig ausgebildet sind, wobei der Bohrerkopf auf den Wendelschaft formschlüssig aufgesetzt und mit diesem mittels einer Lötverbindung fest verbunden wird. Zweck einer solchen mehrteiligen Verbindung ist der Einsatz von unterschiedlichen Materialien für die beiden Teile und insbesondere die Verwendung eines Hartmetall-Bohrerkopfes als verschleißfestes Teil. Eine ähnliche Bauart weist das deutsche Gebrauchsmuster GM 83 28 156 auf, bei welchem der Bohrerkopf nachträglich mit einer Bohrerstange verbunden und die Teile über eine quer verlaufende Spannhülse miteinander verspannt sind. Hierdurch kann der Bohrerkopf einfach von der Bohrerstange gelöst werden.

Die zweiteilige Verbindung zwischen Wendelschaft und Einspannende ist ebenfalls bekannt. Aus der DE-OS 28 11 977 ist beispielsweise ein Spiralbohrer aus Hartmetall bekannt geworden, der im Bereich des Einspannschaftes zweiteilig ausgebildet ist, wobei ein Presssitz die Teile fest zusammenhält.

Aus einem Katalog der Firma Heller sind unter der Bezeichnung "Heller Ratio-Werkzeugsystem" Bohrwerkzeuge für Beton und Stein bekannt geworden, deren Einspannenden separate Gewindeansätze aufweisen, die in spezielle Bohreraufnahme oder Bohrerkupplungen eingeschraubt werden, die ihrerseits fest in einer Werkzeugmaschine angeordnet sind. Ein Bohrerwechsel erfolgt dann durch Lösen des Gewindezapfens.

Allen bekannten Lösungen liegt das Grundprinzip zugrunde, entweder den Bohrerkopf oder das Einspannende mit einem gegebenenfalls dazwischenliegenden Wendelschaft einer Förderwendel zu verbinden, wobei eine feste oder lösbare Verbindung verwendet wird. Eine lösbare Verbindung kann dann beispielsweise eine zusätzlich angebrachte Gewindevorrichtung sein. Die Förderwendel selbst wird stets unabhängig von der zu wählenden Verbindung der Einzelteile gewählt.

Aus der US-A-4 202 420 = DE 27 35 368 C1 ist ein Bohrwerkzeug nach dem Oberbegriff des Anspruchs 1 bekannt geworden, bei welchem insbesondere auch der Einspannschaft mit dem Wendelschaft über ein Gewinde lösbar verbunden ist. Hierbei handelt es sich jedoch um eine Gesteinsbohrkrone, bei welcher die Schraubverbindung zwischen Einspannschaft und Wendelschaft vornehmlich dazu dient, den beim Bohren entstehenden Bohrkern einfach entfernen zu können. Sofern ein solches Werkzeug als normaler Gesteinsbohrer ausgebildet ist, wird wiederum eine einteilige Verbindung zwischen Förderwendel und Wendelschaft gewählt.

Der Erfindung liegt die Aufgabe zugrunde, ein Bohrwerkzeug zu schaffen, bei welchem die Förderwendel gleichzeitig zum Bohrmehltransport und als Befestigungsgewinde für ein mehrteiliges Bohrwerkzeug dienen soll. Darüber hinaus sollen die mehrteilig ausgebildeten Teile im zusammengebauten Zustand sich im Bohrverhalten möglichst wie ein einteiliges Bohrwerkzeug verhalten.

Diese Aufgabe wird ausgehend von einem Bohrwerkzeug der einleitend bezeichneten Art erfindungsgemäß durch die kennzeichnenden Merkmale des Anspruchs 1 gelöst. In den Unteransprüchen sind vorteilhafte und zweckmäßige Weiterbildungen des im Hauptanspruch angegebenen Bohrwerkzeuges wiedergegeben.

Der Erfindung liegt der Kerngedanke zugrunde, daß ein möglichst einfacher Aufbau des mehrteiligen Bohrwerkzeugs dann erzielbar ist, wenn der Wendelschaft für den Einsatz der Bohrmehlförderung gleichzeitig als Befestigungsgewinde insbesondere für den Bohrerkopf und ergänzend auch für den Einspannschaft dient. Hierdurch kann der Wendelschaft aus Stangenmaterial einer eventuell handelsüblichen Gewindestange beispielsweise mit einem Trapezgewinde oder dergleichen verwendet werden, wobei die Gewindestange zur Gewindeverbindung mit Bohrerkopf und/oder Einspannschaft und gleichzeitig als Förderwendel dient. Dabei kann die Wendelstange beliebig kürzbar verwendet werden, so daß die Länge des Bohrwerkzeugs einfach variabel ist. Auf eine solche Wendelstange kann ein Wechselbohrkopf für die verschiedensten Bearbeitungsaufgaben einfach aufgeschraubt und gegebenenfalls bei Verschleiß ausgetauscht werden.

Gleichermaßen kann auch das Einsteckende bzw. der Einspannschaft leicht auf die Wendelstange aufgeschraubt und bei Verschleiß oder bei Wechsel des Einspannfutters ausgetauscht werden. Hierdurch ist eine hohe Flexibilität für jeden Bohrhammer durch einfachen Kupplungsaustausch gewährleistet.

Die Einzelteile können aufgrund ihrer leichten Trennbarkeit auch einfach einem Recyclingprozeß unterzogen werden, da eine Stofftrennung insbesondere hinsichtlich des Wendelschaftes und des Einspannschaftes aufgrund deren Einstückigkeit nicht erforderlich ist. Lediglich der Bohrerkopf müßte aufgrund der eingelöteten Hartmetallschneiden gesondert behandelt werden.

Die Besonderheit der vorliegenden Erfindung liegt weiterhin darin, daß ein hohes Maß an Bohrqualität dadurch erzielbar ist, daß keine wesentlichen Durchmessersprünge insbesondere zwischen Bohrkopf und Wendelschaft entstehen, so daß die Förderwendel optimal zur Bohrmehlförderung beitragen kann.

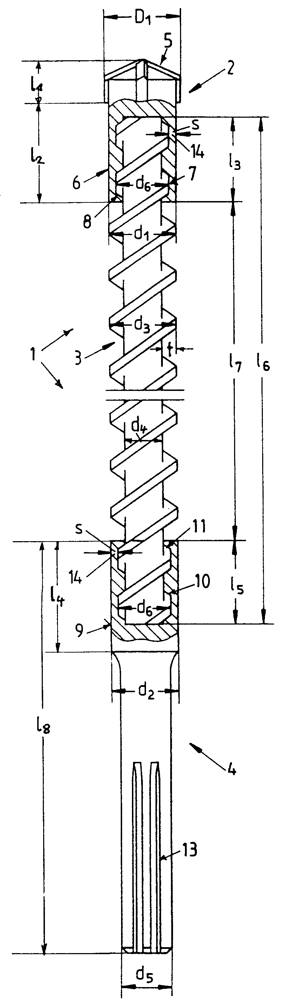

Weitere Einzelheiten und Vorteile der Erfindung ergeben sich aus den in der Zeichnung dargestellten und nachfolgend näher beschriebenen Ausführungsbeispielen. Es zeigt die

Fig.    ein dreiteiliges Bohrwerkzeug mit angepaßten Außendurchmesser der Einzelteile.

Beschreibung des Ausführungsbeispiels:

Das in der Fig. dargestellte dreiteilige Bohrwerkzeug 1 ist als Gesteinsbohrer ausgebildet und besteht aus einem Bohrerkopf 2, einem Wendelschaft 3 sowie einem Einspannschaft 4 zur Aufnahme in eine Werkzeugmaschine.

Der Bohrerkopf 2 weist Hartmetallschneidplatten 5 mit einem Außendurchmesser $D_1$ auf, die den Bohrernenndurchmesser bilden. Dem axialen Längenbereich $l_1$ der eingesetzten Schneidplatten 5 schließt sich ein weitgehend zylindrischer Mantelbereich 6 des Bohrerkopfes 2 mit der Länge $l_2$ an. Innerhalb dieses Bohrerkopfabschnittes 6 befindet sich über die axiale Länge $l_3$ ein Innengewindeabschnitt 7 der zur Aufnahme eines zugehörigen Außengewindeabschnitts 8 des Wendelschaftes 3 dient.

Gleichermaßen weist der Einspannschaft 4 einen zylindrischen Mantelabschnitt 9 mit der Länge $l_4$ auf, der ein Innengewindeabschnitt 10 mit der Länge $l_5$ zur Aufnahme eines zugehörigen Außengewindeabschnitts 11 des Wendelschaftes 3 aufweist.

Der Außendurchmesser $d_1$ des zylindrischen Mantelabschnittes 6 des Bohrerkopfes 2 ist kleiner als der Nenndurchmesser $D_1$ der Kreuzschneidplatten 5, so daß ein Bohrmehltransport auch im Längenabschnitt $l_2$ erfolgen kann. Gegebenenfalls kann der Längenabschnitt 6 zusätzliche Bohrmehlfördernuten an seiner Außenmantelfläche aufweisen, die sich an einem entsprechend angepaßten stirnseitigen Bohrerkopfbereich anschließen.

Der Außendurchmesser $d_2$ des zylindrischen Mantelabschnitts 9 ist etwa gleich groß ausgebildet, wie der Außendurchmesser $d_1$ des zylindrischen Mantelabschnitts 6. Diese Durchmesser $d_1 \approx d_2$ werden so groß gewählt, daß das Innengewinde 7, 10 zur Aufnahme des zugehörigen Außengewindes 8, 11 des Wendelschaftes 3 bzw. die zugehörige Wandstärke s (Bezugszeichen 14) eine ausreichende Festigkeit gegen Bruch aufweist. Eine Optimierung zwischen dem erforderlichen Außendurchmesser $d_1$, $d_2$ zur Erreichung einer ausreichenden Wandstärke s und den zugehörigen Längen $l_3$, $l_5$ kann im Einzelfall vorgenommen werden.

Erfindungsgemäß wird der ein- oder mehrgängige Wendelschaft 3 mit seiner Gesamtlänge $l_6$ und seiner wirksamen Förderlänge $l_7$ als Gewindestange ausgebildet, wobei die Gewindestange sowohl die Aufgabe der Gewindeverbindung zwischen Bohrerkopf 2 und Wendelschaft 3 bzw. Wendelschaft 3 und Einspannende 4 als auch die Aufgabe der Förderung des Bohrmehls hat. Zweckmäßigerweise wird man den Wendelschaft 3 deshalb mit einem Außengewinde versehen, welches beide Eigenschaften gut erfüllt. Dies kann beispielsweise mit einem Trapezgewinde mit einem großen Verhältnis zwischen Außendurchmesser $d_3$ und Kerndurchmesser $d_4$ erfolgen, wobei die Tiefe t der Bohrmehlnut ausreichend groß sein sollte. Dabei ist die Tiefe t der Bohrmehlnut 12 $t = d_3 - d_4$.

Es kann auch eine geeignete handelsübliche Gewindestange als Wendelschaft 3 verwendet werden, oder eine Gewindestange wie sie beispielsweise als Wendelschaft aus der EP 0 322 554 B1 der Anmelderin bekannt geworden ist. Auf den sachlichen Inhalt dieser Druckschrift wird hiermit verwiesen.

Beim Ausführungsbeispiel nach der Fig. weist der Wendelschaft 3 einen sich nicht über seine gesamte Länge $l_6$ erstreckenden gleichen Außendurchmesser $d_3$ auf, d.h. das Innengewinde 7, 10 im Bohrerkopf 2 bzw. im Einspannschaft 4 ist unterschiedlich zum Außengewinde 3.

In der Fig. ist die Gesamtlänge des Einspannschaftes 4 mit $l_8$ und der Durchmesser des Einspannschafts mit $d_5$ der vollständigkeithalber angegeben. Der Einspannschaft 4 weist ein an eine Werkzeugmaschine angepaßtes Einsteckende 13 auf.

Beim Ausführungsbeispiel nach der Fig. wird ein Durchmesserabsatz zwischen dem Außendurchmesser $d_1$ des zylindrischen Mantelabschnittes 6 des Bohrerkopfes 2 und dem Wendelschaftdurchmesser $d_3$ der Förderwendel 3 weitestgehend vermieden ($d_1 \approx d_3$).

Gleichermaßen wird der Außendurchmesser $d_2$ des zylindrischen Mantelabschnitts 9 des Einspannschaftes 4 etwa gleich groß ausgeführt, wie der Außendurchmesser $d_3$ der Förderwendel 3.

Um dies zu ermöglichen, werden die beiden Gewindeabschnitte 7, 8 im Bohrerkopf 2 bzw. die Gewindeabschnitte 10, 11 im Einspannschaft 4 in ihren jeweiligen Durchmessern $d_6$ verkleinert ausgeführt um eine ausreichende Restwandstärke s (Bezugszeichen 14) zu erhalten. Hierfür werden die das Verbindungsgewinde bildenden Längenabschnitte $l_3$, $l_5$ des Wendelschaftes 3 mit einem Außengewindedurchmesser $d_6$ versehen, der kleiner ist als der Außendurchmesser $d_3$ des Förderwendelabschnittes mit der Länge $l_7$. Sofern man die Restwandstärke 14 mit s bezeichnet, gilt $d_3 \approx d_6 + s$. Die Gewindestange zur Bildung des Wendelschaftes 3 wird deshalb in den Längenabschnitten $l_3$, $l_5$ auf ein geringeres Maß $d_6$ abgedreht.

Die Erfindung ist nicht auf die dargestellten und beschriebenen Ausführungsbeispiele beschränkt. Sie umfaßt auch vielmehr alle fachmännischen Weiterbildungen im Rahmen der Schutzrechtsansprüche.

**Patentansprüche**

1.   Bohrwerkzeug, insbesondere Gesteinsbohrer, mit einem Bohrerkopf (2), einem Einspannschaft (4) und einem dazwischenliegenden Wendelschaft (3), wobei der Bohrerkopf und der Einspannschaft (4) mehrteilig mit dem Wendelschaft (3) ausgebildet und wenigstens teilweise über ein Gewinde miteinander verbunden sind, und wobei der Wendelschaft (3) gleichzeitig als Förderwendel (3) ausgebildet ist, die als Befestigungsgewinde (7) für den Einspannschaft (4) dient, dadurch gekennzeichnet, daß der Wendelschaft (3) auch als Befestigungsgewinde (7, 10) für den Bohrerkopf (2) dient, wobei wenigstens der Gewindeabschnitt (7, 8) zur Aufnahme des Bohrerkopfes (2) in seinem Durchmesser ($d_6$) gegenüber dem Außendurchmesser ($d_3$) des Wendelschaftes (3) reduziert ist.

2. Bohrwerkzeug nach Anspruch 1, dadurch gekennzeichnet, daß der Wendelschaft (3) aus einer, auf das erforderliche Maß abgelängten Gewindestange besteht.

3. Bohrwerkzeug nach Anspruch 1 oder 2, dadurch gekennzeichnet, daß der Wendelschaft (3) aus einer Gewindestange mit Trapezgewinde oder dergleichen besteht.

4. Bohrwerkzeug nach einem der vorhergehenden Ansprüche, dadurch gekennzeichnet, daß der Bohrerkopf (2) und/oder der Einspannschaft (4) wenigstens im Bereich der Gewindeaufnahme für den Wendelschaft (3) eine weitestgehend zylindrische Außenmantelfläche (6, 9) aufweist.

5. Bohrwerkzeug nach Anspruch 4, dadurch gekennzeichnet, daß die Außenmantelfläche (6) des Bohrerkopfes (2) zusätzliche Bohrmehlnuten aufweist.

6. Bohrwerkzeug nach Anspruch 4 oder 5, dadurch gekennzeichnet, daß der Bohrerkopf (2) wenigstens eine Hartmetallplatte (5) aufweist, deren Nenndurchmesser ($D_1$) größer ist als der Durchmesser ($d_1$) der Außenfläche (6) des Bohrerkopfes (2).

7. Bohrwerkzeug nach Anspruch 1, dadurch gekennzeichnet, daß der Gewindeabschnitt (10, 11) zur Aufnahme des Bohrerschaftes (4) in seinem Durchmesser ($d_6$) gegenüber dem Außendurchmesser ($d_3$) des Wendelschaftes (3) reduziert ist.

8. Bohrwerkzeug nach Anspruch 1 oder 7, dadurch gekennzeichnet, daß der Außendurchmesser ($d_1$) des Bohrerkopfes und/oder der Außendurchmesser ($d_2$) des Einspannschaftes (4) im Bereich der Gewindeaufnahme (7, 8 bzw. 11, 10) etwa gleich groß ist wie der Außendurchmesser ($d_3$) des freien Förderwendelabschnittes ($l_7$) des Wendelschaftes (3)

9. Bohrwerkzeug nach einem der vorhergehenden Ansprüche, dadurch gekennzeichnet, daß die Förderwendel (3) ein- oder mehrgängig ausgebildet ist.

10. Bohrwerkzeug nach einem der vorhergehenden Ansprüche, dadurch gekennzeichnet, daß die Förderwendel (3) als verdrilltes Längsprofil ausgebildet ist.

**Claims**

1. Drilling tool, in particular rock drill, with a drill head (2), a fixing shank (4) and an interposed spiral shank (3), the drill head and the fixing shank (4) being formed in several parts with the spiral shank (3) and being connected to one another at least in part via a screw thread and the spiral shank (3) simultaneously being designed as a conveying spiral (3) which acts as a fastening screw thread (7) for the fixing shank (4), characterised in that the spiral shank (3) also acts as a fastening thread (7, 10) for the drill head (2), at least the threaded portion (7, 8) being reduced in its diameter ($d_6$) relative to the external diameter ($d_3$) of the spiral shank (3) to receive the drill head (2).

2. Drilling tool according to claim 1, characterised in that the spiral shank (3) consists of a screw-threaded rod cut to the necessary length.

3. Drilling tool according to claim 1 or 2, characterised in that the spiral shank (3) consists of a screw-threaded rod with a trapezoidal thread or the like.

4. Drilling tool according to one of the preceding claims, characterised in that the drill head (2) and/or the fixing shank (4) has a substantially cylindrical external surface (6, 9) at least in the region of the screw-threaded socket for the spiral shank (3).

5. Drilling tool according to claim 4, characterised in that the external surface (6) of the drill head (2) has additional drilling dust grooves.

6. Drilling tool according to claim 4 or 5, characterised in that the drill head (2) has at least one hard metal plate (5) of which the nominal diameter ($D_1$) is greater than the diameter ($d_1$) of the external surface (6) of the drill head (2).

7. Drilling tool according to claim 1, characterised in that the threaded portion (10, 11) for receiving the drill shank (4) is smaller in diameter ($d_6$) than the external diameter ($d_3$) of the spiral shank (3).

8. Drilling tool according to claim 1 or 7, characterised in that the external diameter ($d_1$) of the drill head and/or the external diameter ($d_2$) of the fixing shank (4) is substantially equal in the region of the screw-threaded socket (7, 8 or 11, 10) to the external diameter ($d_3$) of the free conveying spiral portion ($l_7$) of the spiral shank (3).

9. Drilling tool according to one of the preceding claims, characterised in that the conveying spiral (3) is designed with one or more threads.

10. Drilling tool according to one of the preceding claims, characterised in that the conveying spiral (3) is designed as a twisted longitudinal profile.

**Revendications**

1. Foret, en particulier fleuret à rocher, comportant une tête de foret (2), une tige de serrage (4) et une tige hélicoïdale (3) se trouvant entre elles, la tête de foret et la tige de serrage (4) étant réalisées en plusieurs pièces avec la tige hélicoïdale (3) et étant reliées ensemble au moins partiellement par l'intermédiaire d'un filetage, et la tige hélicoïdale (3) étant réalisée simultanément comme hélice de transport (3), qui sert de filetage de fixation (7) pour la tige de serrage (4),
caractérisé en ce que la tige hélicoïdale (3) sert également de filetage de fixation (7,10) pour la tête de foret (2), au moins le tronçon fileté (7,8) pour recevoir la tête de foret (2) présentant un diamètre réduit ($d_6$) par rapport au diamètre externe ($d_3$) de la tige hélicoïdale (3).

2. Foret selon la revendication 1,
caractérisé en ce que la tige hélicoïdale (3) est constituée d'une tige filetée mise à longueur à la dimension nécessaire.

3. Foret selon la revendication 1 ou 2,
caractérisé en ce que la tige hélicoïdale (3) est constituée d'une tige filetée ayant un filetage trapézoïdal ou analogue.

4. Foret selon une des revendications précédentes,
caractérisé en ce que la tête de foret (2) et/ou la tige de serrage (4) présentent, au moins dans la zone de réception filetée pour la tige hélicoïdale (3), une surface d'enveloppe externe (6,9) sensiblement cylindrique.

5. Foret selon la revendication 4,
caractérisé en ce que la surface d'enveloppe externe (6) de la tête de foret (2) présente des rainures supplémentaires pour la poussière de forage.

6. Foret selon la revendication 4 ou 5,
caractérisé en ce que la tête de foret (2) présente au moins une plaque de métal dur (5) dont le diamètre nominal ($D_1$) est plus grand que le diamètre ($d_1$) de la surface externe (6) de la tête de foret (2).

7. Foret selon la revendication 1,
caractérisé en ce que le tronçon fileté (10,11) pour recevoir la tige de foret (4) présente un diamètre réduit ($d_6$) par rapport au diamètre externe ($d_3$) de la tige hélicoïdale (3).

8. Foret selon la revendication 1 ou 7,
caractérisé en ce que le diamètre externe ($d_1$) de la tête de foret et/ou le diamètre externe ($d_2$) de la tige de serrage (4) dans la zone de réception filetée (7,8 ou 11,10) sont sensiblement identiques au diamètre externe ($d_3$) du tronçon libre de l'hélice de transport ($l_7$) de la tige hélicoïdale (3).

9. Foret selon une des revendications précédentes,
caractérisé en ce que l'hélice de transport (3) est réalisée à un ou plusieurs filets.

10. Foret selon une des revendications précédentes,
caractérisé en ce que l'hélice de transport (3) est réalisée comme profilé allongé torsadé.